# EUROPÄISCHE PATENTSCHRIFT

(11) **EP 0 465 946 B1**
(45) Veröffentlichungstag und Bekanntmachung des Hinweises auf die Patenterteilung: **14.09.1994**
(21) Anmeldenummer: 91110693.8
(22) Anmeldetag: 27.06.1991
(51) Int. Cl.: B21C 23/14, B21C 25/00, B23P 15/32, E21B 10/60

(54) **Hartmetall- oder Keramikstab, Verfahren zu seiner Herstellung und Strangpresswerkzeug zur Durchführung des Verfahrens**
Hard metal or ceramic bar, method and extrusion-die for its production
Tige en céramique ou métal dur, procédé et filière d'extrusion pour sa production

(30) Priorität: 05.07.1990 DE 4021383; 19.06.1991 DE 4120165
(43) Veröffentlichungstag der Anmeldung: 15.01.1992
(73) Patentinhaber: KONRAD FRIEDRICHS KG, D-95326 Kulmbach (DE); GOTTLIEB GÜHRING KG, D-72458 Albstadt (DE)
(72) Erfinder: Friedrichs, Arno, W-2000 Hamburg 11 (DE)
(74) Vertreter: Winter, Konrad Theodor, Dipl.-Ing.

(56) Entgegenhaltungen:
- EP-A- 0 118 035
- DE-C- 3 600 681
- FR-A- 2 348 775
- GB-A- 1 161 863
- GB-A- 2 218 928

## Beschreibung

Die Erfindung betrifft ein Verfahren zur Herstellung eines Hartmetall- oder Keramikstabes mit mindestens einer schraubenförmig verlaufenden Innenbohrung, bei dem die plastifizierte Strangpreßmasse aus Hartmetall oder Keramik durch eine Düse gepreßt und während des Preßvorgangs eine wendelförmige Verdrillung erzeugt wird. Die Erfindung ein betrifft ferner Strangpreßwerkzeug zur Durchführung des Verfahrens mit einer Düse und einem koaxial zu dieser angeordneten Dorn sowie einen nach dem Verfahren heigestellten Sinterrowing.

Stäbe aus Hartmetall oder Keramik mit wenigstens einer in ihrem Inneren schraubenförmig verlaufenden, also gedrallten, Bohrung, sind beispielsweise aus EP 01 18 035 A1 (nächstligender Stand der Technik), DE 36 00 681 A1 oder US-PS 4 059 031 bekannt. Derartige Stäbe werden z.B. Zu Bohrern weiterverarbeitet, wobei die gedrallten Innenbohrungen die späteren Spül- bzw. Kühlkanäle zur Heranführung des Kühl- und Spülmittels bilden. Die wendelförmig verlaufenden Kühlkanäle werden hierbei in der Weise hergestellt, daß der aus der Strangpreßeinrichtung austretende Rohling mittels entsprechender Verdrilleinrichtungen mit einer auf den Materialfluß, auf die gewünschte Bohrergeometrie und auf den Wendelverlauf der Kühlkanäle abgestimmten Winkelgeschwindigkeit verdrillt wird. Dies erfordert neben dem eigentlichen Strangpreßwerkzeug zusätzliche Verdrilleinrichtungen und hierauf abgestimmte Steuer- und Regelorgane. Zur Einsparung dieser zusätzlichen Vorrichtungen ist es aus der bereits genannten DE 36 00 681 A1 bekanntgeworden, die Strangpreßmasse bereits während des Preßvorgangs wendelförmig zu verdrillen. Der Preßvorgang und das Verdrillen werden also in einem Verfahrensschritt gleichzeitig durchgeführt. Dabei findet ein Strangpreßwerkzeug mit einer Düse Verwendung, an deren Innenmantel wenigstens ein in Preßrichtung wendelförmig verlaufender Steg angeordnet ist, der der durch die Düse gepreßten Strangpreßmasse von radial außen her eine Drallbewegung aufzwingt. Bei diesem bekannten Strangpreßwerkzeug ist außerdem vorgesehen, an dem vor dem Düseninnenraum endenden Dorn einen oder mehrere elastische Stifte zu befestigen, die in den Düseninnenraum ragen und den gewünschten Spülbohrungsdurchmesser aufweisen. Dieses bekannte Verfahren bzw. Strangpreßwerkzeug weist jedoch eine Reihe von Nachteilen auf. Die durch die wendelförmigen Stege des Düseninnenmantels dem Massestrom aufgeprägte Drallbewegung nimmt ausgehend von der Mantelzone radial nach innen in Abhängigkeit von der Zähigkeit und der inneren Reibung des ausgepreßten Materials mehr oder weniger stark ab, so daß die notwendige Geometrie der gedrallten Innenbohrungen kaum eingehalten und erhalten werden kann. Eine reproduzierbare Drallbewegung wird allenfalls in der Mantelzone des Massestroms im Bereich der Düsenstege erhalten, die jedoch nur eine geringe radiale Erstreckung aufweisen. Wegen dieser Stege läßt sich auch kein Stabmaterial mit glatter Mantelfläche erzeugen; vielmehr weist das erzeugte Stabmaterial an seiner Mantel- oder Außenfläche ausgeprägte wendelförmige Eindrückungen auf. Da die verarbeitete Keramik- bzw. Hartmetallmasse stark abrasiv wirkt, kommt es zudem sehr schnell zu einem Verschleiß der Drallstege, so daß das Werkzeug nur eine kurze Standzeit besitzt. Die Wiederaufarbeitung der Düsen durch Innenerodieren ist kostspielig und verteuert somit die Herstellung der Hartmetall- bzw. Keramikstäbe.

Ausgehend von diesem Stand der Technik besteht die Aufgabe der Erfindung darin, ein Verfahren und eine Vorrichtung zur Herstellung eines Hartmetall- oder Keramikstabrohlings zu schaffen, dessen gedrallte Innenbohrungen exakt und mit über die Stablänge gleichmäßiger Steigung ausgebildet sind. Gleichzeitig soll die Mantelfläche der Stabrohlinge glatt ausgebildet sein, so daß der oft notwendige Schleifprozeß am Außenumfang zur Beseitigung der gedrallten Einprägungen bei bekannten Stabrohlingen vermieden wird. Es sollen also Stabrohlinge mit innenliegenden verdrallten Bohrungen erzeugt werden, die weniger Rohmaterial bei der Herstellung von fertigen Werkzeugen aus diesen Rohlingen wegen der geringeren Aufmaße der Außendurchmesser benötigen. Das Herstellverfahren soll einfach und sicher durchführbar sein und zu verringerten Herstellkosten führen. Die Vorrichtung zur Durchführung des Verfahrens, also das Strangpreßwerkzeug, soll dabei einfach und kompakt aufgebaut sein, eine hohe Standzeit aufweisen und eine exakt reproduzierbare Drallbewegung erzeugen können. Dabei sollen die zur Weiterverarbeitung zum Hartmetall- oder Keramikwerkzeug mit verdrallten Innenbohrungen eingesetzten Verdrill-, Steuer- und Regeleinrichtungen wie auch die aufwendigen Düsen mit am Düseninnenmantel angeordneten Stegen in Wegfall kommen.

Die Lösung dieser Aufgabe erfolgt mit den Merkmalen der Ansprüche 1 bzw. 10. Weitere für die Aufgabenlösung vorteilhafte und förderliche Weiterbildungen sind in den den weiteren Ansprüchen umschrieben.

Bei der Herstellung des Hartmetall- bzw. Keramikstabes wird also der plastifizierten Strangpreßmasse mittels einer innerhalb des Massestroms liegenden Dralleinrichtung eine Drallbewegung aufgezwungen, die in Radialrichtung gleichmäßig über den Querschnitt wirkt, oder aber der Dralleinrichtung wird durch den Massestrom eine Drehbewegung aufgezwungen. Im ersteren Fall ist die Dralleinrichtung drehfest, im zweiten Fall drehbar angeordnet. Die Masse wird in einem Fall mit Drall durch den Düsenmund gepreßt, der als glatter Kanal ausgebildet ist, und tritt sodann mit Drall ins Freie. Im zweiten Fall wird die Masse drallfrei oder nahezu drallfrei durch den Düsenmund gepreßt und tritt sodann nahezu drallfrei ins Freie. Zur Bildung der gedrallten Innenbohrungen wird in den Massestrom fadenförmiges Material eingepreßt, das der Drallbewegung der Masse bzw. Drehbewegung der Dralleinrichtung folgt. Statt des eingepreßten Materials können auch entsprechend der Anzahl der Innenbohrungen elastische Fäden, bewegliche Gliederketten od. dgl. in den Düsenmund hineinragen. Das in Fadenform in den Massestrom eingepreßte Material gelangt mit der Strömungsgeschwindigkeit der Strangpreßmasse in diese, wobei das plastische Fadenmaterial von außen unter Druck zugeführt wird.

Bei diesen Material handelt es sich um einen leicht verdampfbaren oder durch chemische bzw. physikalische Vorgänge entfernbaren Werkstoff, der spätestens beim Sinterprozeß aufgelöst und entfernt wird. Das Strangpreßwerkzeug zur Durchführung des Verfahrens zeichnet sich durch eine Dralleinrichtung aus, die als ein- oder mehrgängige Drallschnecke ausgebildet ist. Sie ist koaxial und in Preßrichtung gesehen vor dem als glatter zylindrischer Kanal ausgebildeten Düsenmund angeordnet. Damit erfaßt die Drallschnecke den gesamten Querschnitt des hindurchgepreßten Materialstroms, so daß die Drallbewegung gleichmäßig über den Querschnitt des Materialstroms ausgebildet wird. Die Drallschnecke ist leicht auswechselbar innerhalb des Strangpreßwerkzeugs gehalten und kann bei Verschleiß ohne Schwierigkeiten gegen eine andere Drallschnecke ausgetauscht werden. Die Düse selbst ist glatt ausgebildet und weist insbesondere im Mündungsbereich einen zylindrischen Kanal mit glattem Innenmantel auf. Durch das Fehlen besonderer Drallstege am Düseninnenmantel wird der Verschleiß der Düse in Grenzen gehalten. Die Drallschnecke ist entweder drehfest mit dem Schneckenträger verbunden und zwingt dem hindurchgepreßten Massestrom, wie erwähnt, eine Drallbewegung auf. Nach einem weiteren Merkmal kann die Drallschnecke aber auch drehbar am Schneckenträger angeordnet sein, so daß sie die Fähigkeit zur Autorotation besitzt und durch den hindurchgepreßten Massestrom in Drehung versetzt wird, während der Massestrom selbst drallfrei oder nahezu drallfrei bleibt. Mit dem Verfahren und dem Strangpreßwerkzeug nach der Erfindung werden Hartmetall- bzw. Keramikstäbe mit exakt ausgebildeten und gedrallten Innenbohrungen erhalten, deren Außenfläche glatt ist, also keinerlei Eindrückungen, Vertiefungen, Riefen, Erhöhungen od. dgl. aufweist. Die im Strangpreßwerkzeug verwendete Drallschnecke ist einfach herstellbar, beispielsweise durch eine entsprechende Verdrillung von Leitblechen, so daß die Hartmetall- bzw. Keramikstabrohlinge kostengünstig herstellbar sind.

Die Erfindung wird nach folgend anhand von Ausführungsbeispielen im Zusammenhang mit der Zeichnung näher erläutert. Es zeigen:
- Fig. 1: einen Längsschnitt durch ein Strangpreßwerkzeug in schematischer abgebrochener Darstellung,
- Fig. 2: einen Längsschnitt durch eine weitere Ausführungsform des Strangpreßwerkzeugs,
- Fig. 3: eine weitere Variante des Strangpreßwerkzeugs im schematischen Längsschnitt und
- Fig. 4: einen Strang bzw. Stab mit Drallbohrungen unterschiedlicher Steigung.

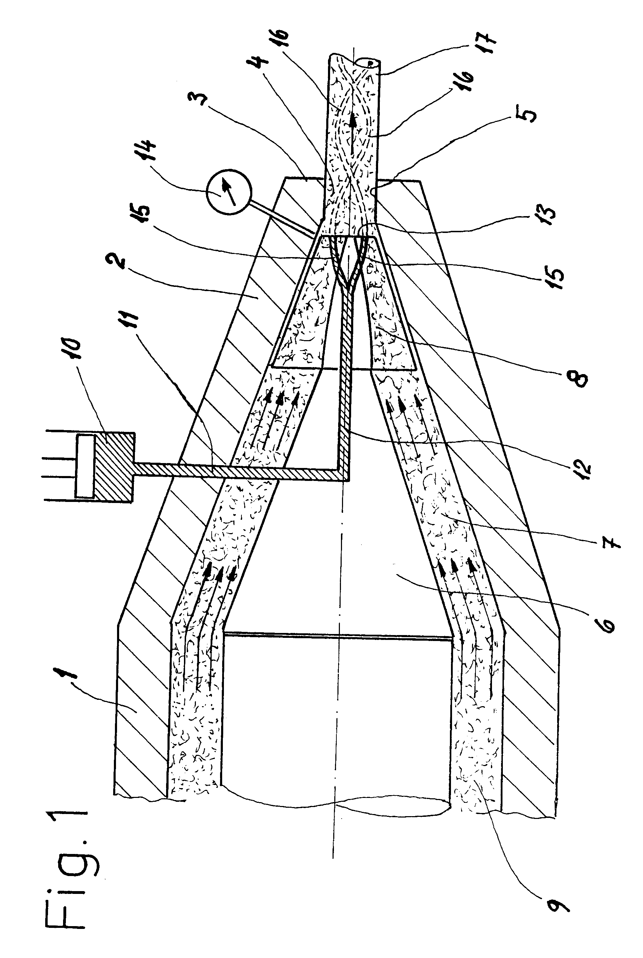

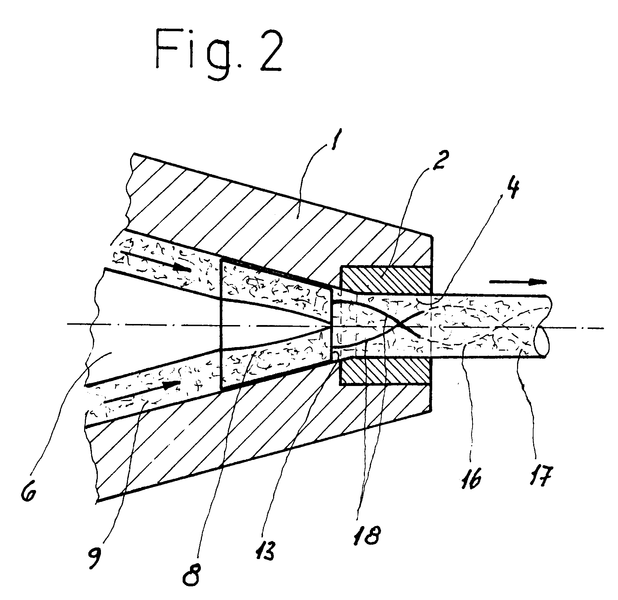

Das Strangpreßwerkzeug besteht im wesentlichen aus dem Gehäuse 1, das sich etwa kegelstumpfförmig verjüngt und in die Düse 2 übergeht. In Fig. 1 ist die Düse 2 der Einfachheit halber als mit dem Gehäuse 1 einstückig ausgebildet gezeigt; selbstverständlich kann die Düse 2 auch, wie in Fig. 2, als besonderes Teil gestaltet und in das Gehäuse 1 eingesetzt sein. Die Düse 2 weist im Austrittsbereich, also im Bereich des Düsenmundes 3, einen zylindrischen Kanal 4 auf, dessen Innenmantel 5 glatt ausgebildet ist. Der Durchmesser dieses zylindrischen glatten Kanals 4 entspricht dem Durchmesser der mit dem Strangpreßwerkzeug hergestellten Stäbe aus Hartmetall bzw. Keramik. Koaxial zum Gehäuse 1 ist ein innenliegender Dorn 6 angeordnet, der gleichfalls zum Austrittsbereich des Strangpreßwerkzeugs hin kegelstumpfförmig gestaltet ist, so daß zwischen ihm und dem Gehäuse 1 ein in Preßrichtung kontinuierlich im Durchmesser abnehmender Ringspalt 7 gebildet wird. Am Dornende und vor dem Kanal 4 ist eine Dralleinrichtung 8 angeordnet, die als Drallschnecke ausgebildet ist. Diese Drallschnecke 8, die beispielsweise aus in Preßrichtung wendelförmig verlaufenden Blechen od. dgl. besteht, ist drehfest oder drehbar mit dem Dorn 6 verbunden, der somit gleichzeitig als Träger der Drallschnecke 8 eingesetzt ist. Die Drallschnecke 8 ist ein- oder mehrgängig ausgebildet. Sie erstreckt sich in Radialrichtung bis hin zur Innenwandung des Gehäuses 1, so daß der gesamte von der Preßmasse 9 durchsetzte Querschnitt von der Drallschnecke 8 eingenommen wird. Zumindest dann, wenn die Drallschnecke 8 drehbar am Dorn 6 angeordnet ist, ist zwischen der Drallschnecke 8 und der Innenwandung des Gehäuses 1 ein geringer Spalt freigehalten, so daß die Drallschnecke 8 frei drehen kann.

Wie Fig. 1 weiterhin deutlich zeigt, steht das Preßwerkzeug mit einer Druckkammer 10 in Verbindung, die ein Material aufnimmt, das unter Druck und/oder bei erhöhter Temperatur plastisch ist und über einen weiten Druck- und Temperaturbereich plastisch bleibt. Die Druckkammer 10 steht über Kanäle 11 und 12, die sich in der Drallschnecke 8 fortsetzen und an der dem glatten Kanal 4 zugewandten Hinterkante 13 der Drallschnecke 8 austreten, mit dem Innenraum des Strangpreßwerkzeuges im Bereich der Düse 2 in Verbindung. Des weiteren ist noch eine Druckmeßeinrichtung 14 am Preßwerkzeug angeordnet, mit de-ren Hilfe der Druck im Bereich der Hinterkante 13 der Drallschnecke 8 gemessen werden kann. Es sei noch darauf hingewiesen, daß die Austrittsbohrungen 15 in der Drallschnecke 8 jeweils in einem bestimmten radialen Abstand von der Achse angeordnet sind, der der Lage der gewünschten Innenbohrungen bei den Stabrohlingen entspricht.

Der Verfahrensablauf bei der Herstellung der Stäbe aus Hartmetall bzw. Keramik mit gedrallten Innenbohrungen mittels des Preßwerkzeugs ist folgender: Das plastifizierte, aus Hartmetall oder Keramik bestehende Strangpreßmaterial 9 wird unter Druck in den Ringspalt bzw. die Ringkammer 7 gepreßt und gelangt zur innerhalb des Massestroms liegenden Drallschnecke 8.

Beim Hindurchpressen des Strangpreßmaterials durch die stationäre, also drehfest angeordnete, Drallschnecke 8 wird dem Strangpreßmaterial in diesem Bereich eine Drallbewegung aufgezwungen. Diese Drall- bzw. Drehbewegung der Preßmasse bleibt bei ihrem Eintritt in den glatten Kanal 4 der Düse 2 sowie beim Austritt aus diesem Kanal 4 ins Freie erhalten und zeichnet sich durch große Gleichmäßigkeit über den gesamten Querschnitt des Massestroms aus. Ist die Drallschnecke 8 drehbar angeordnet, d.h. ist sie der Autorotation fähig, so wird der Drallschnecke 8 durch den hindurchgepreßten Massestrom eine Drehbewegung aufgezwungen, während der Massestrom drallfrei oder nahezu drallfrei bleibt und die Düse 2 auch nahezu drallfrei verläßt. Die Drallbewegung und die Größe des Dralls bzw. die Drehbewegung der Drallschnecke 8 werden weitgehend durch die Ausbildung der Drallschnecke 8 beeinflußt. So kann diese Drallschnecke 8 ein- oder mehrgängig ausgebildet sein und die Steigung der Drallschnecke 8, d.h. ihr Drallwinkel, ist entsprechend der gewünschten Steigung der gedrallten Innenbohrungen der Hartmetall- bzw. Keramikstäbe eingestellt. In den Massestrom wird von der Druckkammer 10 her über die Kanäle 11 und 12 in die Bohrungen 15 der Drallschnecke 8 leicht verdampfbares oder auflösbares Material eingebracht, das in Fadenform aus der Hinterkante 13 der Drallschnecke 8 austritt und dabei die Drallbewegung des Massestroms bzw. der Drallschnecke 8 mitmacht. Durch dieses fadenförmige Material werden die Innenbohrungen 16 innerhalb des aus der Düse 2 austretenden Stabrohlings 17 gebildet, wobei das fadenförmige Material spätestens beim Sinterprozeß entfernt wird, so daß ein Stabrohling mit exakt verdrallten Innenbohrungen zurückbleibt. Die Austrittsgeschwindigkeit des fadenförmigen Materials aus den Bohrungen 15 der Drallschnecke 8 ist gleich der Strömungsgeschwindigkeit der durch die Drallschnecke 8 gepreßten Strangpreßmasse. Der zum Einpressen des Fadenmaterials benötigte Druck ist gleich bzw. geringfügig größer als der Druck im Massestrom im Bereich der Hinterkante 13 der Drallschnecke 8, der mittels der Meßeinrichtung 14 ermittelt und angezeigt wird. Die stationäre Dralleinrichtung 8 führt zu einer exakten Verdrallung der hindurchgepreßten Masse. Bei frei drehbarer Anordnung der Dralleinrichtung 8 wird diese durch die hindurchgepreßte Masse exakt gedreht. Es werden somit Stabrohlinge 17 mit exakt verdrallten Innenbohrungen 16 und - wegen des Durchtritts durch den glatten Kanal 4 - glatter Mantelfläche gebildet.

In Fig. 2 ist eine modifizierte Vorrichtung zum Strangpressen gezeigt. Bei diesem Strangpreßwerkzeug sind an der Hinterkante 13 der vom Dorn 6 gehaltenen Drallschnecke 8 entsprechend der gewünschten Anzahl der späteren Innenbohrungen des Stabrohlings mehrere elastische Fäden 18 angehängt. Diese elastischen Fäden 18 können beispielsweise auch bewegliche Gliederketten od. dgl. sein. Die Düse 2 mit glattem Durchgangskanal 4 ist als besonderes Teil aus verschleißfestem Material in das Gehäuse 1 eingesetzt. Wie bereits weiter oben beschrieben, wird das Strangpreßmaterial 9 im Bereich der Drallschnekke 8 verdrallt und gelangt mit Drall in den nachgeschalteten Kanal 4 der Düse 2, oder aber die Drallschnecke 8 wird durch das Strangpreßmaterial 9 in Rotation versetzt, wobei das Strangpreßmaterial selbst drallfrei oder nahezu drallfrei bleibt. Die an der Drallschnecke 8 angehängten elastischen Fäden 18 machen die Drall- bzw. Drehbewegung mit. Diese Fäden 18 ragen in den Kanal 4 der Düse 2 bis zu dessen Ende, also bis zur Düsenmündung, hinein. Der Durchmesser dieser Fäden 18 - oder der Gliederketten od. dgl. - entspricht dem gewünschten Durchmesser der Innenbohrungen 16 des austretenden Stabrohlings 17.

Es sei noch angemerkt, daß der Drallwinkel der Drallschnecke 8 und der Drallwinkel der Innenbohrungen 16 der Stäbe 17 durch einen festen Faktor voneinander verschieden sind. Insbesondere ist der Drallwinkel der Dralleinrichtung 8 um einen bestimmten Betrag größer als der Drallwinkel der gedrallten Innenbohrungen 16. Die im Zusammenhang mit Fig. 1 erwähnte Druckkammer 10 kann beispielsweise als Kolben- oder Schneckenpresse (Extruder) ausgebildet sein.

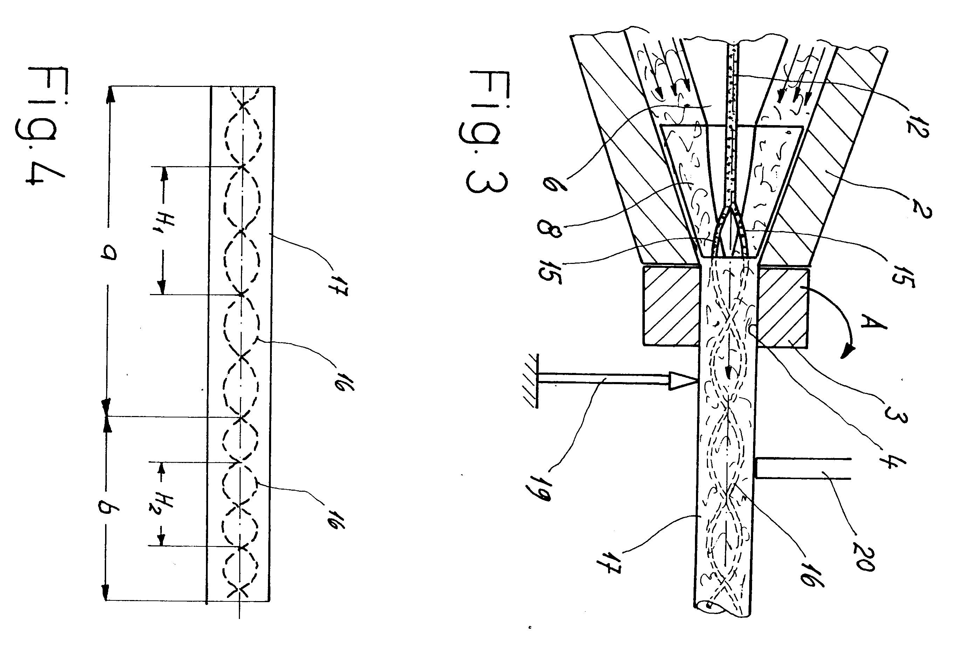

In Fig. 3 ist eine weitere Variante des Strangpreßwerkzeuges in abgebrochener Darstellung gezeigt. Hierbei ist das Düsenmundstück 3 mit seinem glatten zylindrischen Kanal 4 drehbar ausgebildet, d.h. es rotiert um seine Längsachse, wie in Fig. 3 durch den Pfeil A symbolisiert. Das Düsenmundstück 3 kann frei drehbar sein, so daß die in Umfangsrichtung wirkenden Reibungskraftkomponenten des austretenden Massestroms das Mundstück 3 mitnehmen, wobei es zu einer entsprechenden Verminderung der Reibungskräfte kommt, was zu einer entsprechenden Verschleißminderung des Düsenmundstücks 3 führt. Um aber auf den Drall des Massestroms und damit auf die Steigung der Drallbohrungen 16 unmittelbar Einfluß nehmen zu können, ist das Düsenmundstück 3 zweckmäßigerweise von außen durch einen nicht weiter dargestellten Antrieb angetrieben. Das Düsenmundstück 3 kann also mit einer bestimmten Rotationsgeschwindigkeit angetrieben werden, wobei diese Rotationsgeschwindigkeit den jeweiligen Erfordernissen anpaßbar ist. Je nach Größe und Richtung der Drehbewegung des Düsenmundstücks 3 wird die Drallbewegung des austretenden Stabrohlings 17 verstärkt oder abgeschwächt. D.h. durch die überlagerte Rotationsbewegung des Düsenmundstücks 3 kann der Drall des austretenden Materials je nach Erfordernis korrigiert werden. Im Bereich des Düsenmundstücks 3 ist weiterhin eine ortsfest angeordnete Markierungsvorrichtung 19 vorgesehen, mit deren Hilfe auf der Außenfläche des austretenden Stabrohlings 17 Meßlinien oder Meßstreifen aufgebracht werden, beispielsweise durch Aufspritzen usw. Diese Meßlinien sind auf der Außenfläche des Stabrohlings 17 als Schraubenlinien aufgebracht und zeigen somit exakt die jeweilige Steigung der innenliegenden Drallbohrungen 16 an, die aus der Überlagerung der Austrittsgeschwindigkeit der Strangpreßmasse aus dem Düsenmundstück 3 und dem Drall dieser austretenden Masse, hervorgerufen durch Dralleinrichtung 8 und Düsenmundstück 3, resultiert. Der Markierungsvorrichtung 19 nachgeordnet ist eine Meßvorrichtung 20, die die jeweilige Drallsteigung ermittelt. Ergeben sich Unterschiede zwischen der Ist- und der Soll-Drallsteiung, so kann durch entsprechendes Ändern der Rotationsgeschwindigkeit der drehbaren Düse 3 die Differenz ausgeglichen werden, so daß Stabrohlinge 17 mit Drallbohrungen 16 exakter Steigung hergestellt werden können. Ist es beispielsweise erforderlich, die Drallsteigung während des Auspreßvorganges zu ändern, biespielsweise bei Rohlingen, die für Stufenbohrer benötigt werden, so ist dies durch entsprechende Änderung der Drehgeschwindigkeit des Düsenmundstücks 3 möglich. In Fig. 4 ist ein Stabrohling 17 gezeigt, dessen Drallbohrungen 16 zunächst im Abschnitt a eine Steigung H₁ und sodann im Abschnitt b eine Steigung H₂ aufweisen. Mit dem Preßwerkzeug mit drehbarem Düsenmundstück 3 können auch Drallbohrungen hergestellt werden, deren Drallsteigung sich kontinuierlich ändert, so daß Drallbohrungen 16 im Stabrohling 17 herstellbar sind, die große Genauigkeit aufweisen und die an jedes Erfordernis anpaßbar sind.

## Patentansprüche

1. Verfahren zur Herstellung eines Hartmetall- oder Keramikstabes, bei dem die plastifizierte Strangpreßmasse aus Hartmetall oder Keramik durch eine Düse gepreßt und während des Preßvorgangs eine wendelförmige Verdrillung erzeugt wird, dadurch gekennzeichnet, daß der Strangpreßmasse (9) mittels einer innerhalb des Massestroms liegenden Dralleinrichtung (8) eine gleichmäßig über den Querschnitt des Stranges wirkende Drallbewegung oder der Dralleinrichtung (8) durch die Strangpreßmasse (9) eine Drall- bzw. Drehbewegung aufgezwungen und die Masse mit Drall bzw. drallfrei oder nahezu drallfrei durch einen nachgeschalteten glatten Kanal (4) der Düse ins Freie gepreßt wird, wobei zur Bildung der Innenbohrung bzw. -bohrungen (16) der Drall- bzw. Drehbewegung folgendes fadenförmiges Material in den Massestrom hineinragt bzw. eingepreßt wird.

2. Verfahren nach Anspruch 1, dadurch gekennzeichnet, daß das fadenförmige Material aus elastischen Fäden (18) entsprechend der Anzahl der Innenbohrungen (16) besteht, die in den Kanal (4) hineinragen.

3. Verfahren nach Anspruch 1, dadurch gekennzeichnet, daß in den Massestrom leicht verdampfbares oder durch chemische bzw. physikalische Vorgänge entfernbares plastisches Material in Fadenform mit der Strömungsgeschwindigkeit der Strangpreßmasse in diese eingepreßt wird.

4. Verfahren nach Anspruch 3, dadurch gekennzeichnet, daß das fadenförmige Material spätestens beim Sinterprozeß entfernt wird.

5. Verfahren nach Anspruch 3 oder 4, dadurch gekennzeichnet, daß das plastische Fadenmaterial von außen unter Druck zugeführt wird.

6. Verfahren nach einem der Ansprüche 3 bis 5, dadurch gekennzeichnet, daß das Fadenmaterial durch Druck plastifiziert wird.

7. Verfahren nach einem der Ansprüche 3 bis 6, dadurch gekennzeichnet, daß das Fadenmaterial durch Temperaturerhöhung plastifiziert wird.

8. Verfahren nach einem der Ansprüche 3 bis 7, gekennzeichnet durch ein Fadenmaterial, das über einen weiten Druck- und/oder Temperaturbereich plastisch bleibt.

9. Verfahren nach einem der Ansprüche 2 bis 8, dadurch gekennzeichnet, daß der Außendurchmesser der elastischen Fäden (18) bzw. des eingepreßten fadenförmigen plastischen Materials dem Innendurchmesser der verdrallten Innenbohrungen (16) entspricht.

10. Strangpreßwerkzeug zur Durchführung des Verfahrens nach einem der Ansprüche 1 bis 9 mit einer Düse und einem innenliegenden koaxialen Dorn, dadurch gekennzeichnet, daß die Dralleinrichtung als ein- oder mehrgängige Drallschnecke (8) ausgebildet ist, die koaxial und - in Preßrichtung gesehen - vor dem als glatter zylindrischer Kanal (4) ausgebildeten Düsenmund (3) angeordnet ist.

11. Strangpreßwerkzeug nach Anspruch 10, dadurch gekennzeichnet, daß die Drallschnecke (8) drehfest mit dem als Schnekkenträger ausgebildeten Dorn (6) verbunden ist.

12. Strangpreßwerkzeug nach Anspruch 10, dadurch gekennzeichnet, daß die Drallschnecke (8) drehbar am als Schneckenträger ausgebildeten Dorn (6) befestigt ist.

13. Strangpreßwerkzeug nach einem der Ansprüche 10 bis 12, dadurch gekennzeichnet, daß an der Hinterkante (13) der Drallschnecke (8) elastische Fäden (18) befestigt sind, die in den glatten Kanal (4) des Düsenmunds (3) bis zum Düsenende hineinragen.

14. Strangpreßwerkzeug nach einem der Ansprüche 10 bis 12, dadurch gekennzeichnet, daß in der Drallschnecke (8) bis zu deren Hinterkante (13) verlaufende Bohrungen (15) angeordnet sind, die über Kanäle (11, 12) des Dorns (6) mit einer Zuführung für das plastische Fadenmaterial in Verbindung stehen.

15. Strangpreßwerkzeug nach Anspruch 14, dadurch gekennzeichnet, daß die Zuführung für das plastische Fadenmaterial als Druckkammer (10) ausgebildet ist.

16. Strangpreßwerkzeug nach einem der Ansprüche 10 bis 15, dadurch gekennzeichnet, daß eine den Druck des Massestroms im Bereich der Hinterkante (13) der Drallschnecke (8) messende Druckmeßeinrichtung (14) angeordnet ist.

17. Strangpreßwerkzeug nach einem der Ansprüche 10 bis 16, dadurch gekennzeichnet, daß der Drallwinkel der Drallschnecke (8) um einen bestimmten Faktor gegenüber dem Drallwinkel der Innenbohrungen (16) der Stäbe (17) verschieden ist.

18. Strangpreßwerkzeug nach Anspruch 17, dadurch gekennzeichnet, daß die Druckkammer (10) als Kolben- oder Schneckenpresse ausgebildet ist.

19. Strangpreßwerkzeug nach einem der Ansprüche 10 bis 18, dadurch gekennzeichnet, daß das Düsenmundstück (3) mit glattem zylindrischen Kanal (4) drehbar ausgebildet ist.

20. Strangpreßwerkzeug nach Anspruch 18, dadurch gekennzeichnet, daß das rotierende Düsenmundstück (3) von außen angetrieben ist.

21. Strangpreßwerkzeug nach einem der Ansprüche 10 bis 20, dadurch gekennzeichnet, daß in der Nähe des Düsenmundstücks (3) eine ortsfeste Markierungsvorrichtung (19) zum Anbringen von Meßlinien bzw. -streifen am austretenden Massestrom und eine Meßvorrichtung (20) zur Ermittlung der Drallsteigung der Meßlinien angeordnet sind.

22. Hartmetall- oder Keramikstab, herstellbar nach dem Verfahren gemäß einem der Ansprüche 1 bis 9, mit mindestens einer schraubenförmig verlaufenden Innenbohrung, dadurch gekennzeichnet, daß die Außen- oder Mantelfläche des Stabes ohne erforderliche Nachbearbeitung des Außenumfangs von einer glatten Kreiszylindermantelfläche gebildet ist, die keinerlei Eindrückungen, Vertiefungen, Riefen oder Erhöhungen aufweist.

## Claims

1. A method of producing a hard-metal or ceramic rod, wherein the plasticised hard-metal or ceramic material for extrusion is pressed through a nozzle and a helical twist is produced during the pressing operation, characterised in that a twisting means (8) disposed inside the stream of material (9) imparts a uniform twisting motion to the material over its cross-section, or the twisting means (8) is made to twist or rotate by the material for extrusion (9), and the material is pressed into the open with a twist or without a twist or substantially without a twist through a downstream smooth duct (4) in the nozzle, and in order to form the inner bore or bores (16), threads of material following the twisting or rotary motion project or are pressed into the stream of material.

2. A method according to claim 1, characterised in that the threads of material are resilient threads (18) in number corresponding to the inner bores (16) projecting into the duct (4).

3. A method according to claim 1, characterised in that plastic material in thread form and readily evaporated or removed by chemical or physical processes is pressed into the stream of extruded material at the flow rate thereof.

4. A method according to claim 3, characterised in that the threads of material are removed at latest during the sintering process.

5. A method according to claim 3 or 4, characterised in that the plastic thread material is supplied from the exterior under pressure.

6. A method according to any of claims 3 to 5, characterised in that the thread material is plasticised by pressure.

7. A method according to any of claims 3 to 6, characterised in that the thread material is plasticised by increasing the temperature.

8. A method according to any of claims 3 to 7, characterised by a thread material which remains plastic over a wide pressure and/or temperature range.

9. A method according to any of claims 2 to 8, characterised in that the outside diameter of the resilient threads (18) and/or of the pressed-in threads of plastic material is equal to the inside diameter of the twisted inner bores (16).

10. An extrusion tool for working the method according to any one of claims 1 to 9, comprising a nozzle and an internal coaxial mandrel, characterised in that the twisting means is made up of a single or multiple-thread twist screw (8) disposed coaxially with and - as seen in the direction of pressing - in front of the nozzle mouth (3), which is in the form of a smooth cylindrical duct (4).

11. An extrusion tool according to claim 10, characterised in that the twist screw (8) is non-rotatably connected to and supported by the mandrel (6).

12. An extrusion tool according to claim 10, characterised in that the twist screw (8) is rotatably secured to and supported by the mandrel (6).

13. An extrusion tool according to any one of claims 10 to 12, characterised in that resilient threads (18) are secured to the rear edge (13) of the twist screw (8) and extend into the smooth duct (4) of the nozzle mouth (3) up to the end of the nozzle.

14. An extrusion tool according to any one of claims 10 to 12, characterised in that bores (15) in the twist screw (8) extend up to its rear edge (13) and are connected via ducts (11, 12) in the mandrel (6) to a means for supplying the plastic thread material.

15. An extrusion tool according to claim 14, characterised in that the means for supplying the plastic thread material is a pressure chamber (10).

16. An extrusion tool according to any of claims 10 to 15, characterised in that a device (14) for measuring the pressure of the flow of material is disposed near the rear edge (13) of the twist screw (8).

17. An extrusion tool according to any of claims 10 to 16, characterised in that the angle of twist of the twist screw (8) differs by a specific factor from the angle of twist of the bores (16) in the rods (17).

18. An extrusion tool according to claim 17, characterised in that the pressure chamber (10) is a piston press or screw press.

19. An extrusion tool according to any one of claims 10 to 18, characterised in that the nozzle mouthpiece (3) with the smooth cylindrical duct (4) are rotatable.

20. An extrusion tool according to claim 18, characterised in that the rotating nozzle mouthpiece (3) is driven from the exterior.

21. An extrusion tool according to any one of claims 10 to 20, characterised in that a stationary marking device (19) for attaching measuring lines or strips to the emerging stream of material and a measuring device (20) for determining the pitch of the twist of the measuring lines are disposed near the nozzle mouthpiece (3).

22. A hard-metal or ceramic rod manufactured by the method according to any one of claims 1 to 9, formed with at least one helical inner bore and characterised in that the outer or generated surface of the rod is formed from a smooth circular-cylindrical surface without the need for further machining of the outer periphery, and does not have any indentations, recesses, grooves or elevated parts.

## Revendications

1. Procédé de fabrication d'un barreau en métal dur ou en céramique, dans lequel la masse d'extrusion plastifiée, en métal dur ou en céramique, est pressée à travers une buse et pendant le processus de pressage est produit une torsion en hélice, caractérisé en ce que la masse extrudée (9) est contrainte, au moyen d'un dispositif de mise en rotation (8), monté à l'intérieur du courant de la masse, à effectuer un mouvement rotatoire régulier agissant sur la section transversale du boudin, ou le dispositif de mise en rotation (8), est contraint, par la masse extrudée (9), à effectuer un mouvement de vrille ou de rotation et la masse étant extrudée, avec une rotation, ou bien sans rotation, ou à peu près sans rotation, à travers un canal lisse (4), placé en aval, de la buse, pour passer à l'air libre, où, pour former le, ou les perçage(s) (16), le matériau filamenteux pénètre, ou bien est extrudé dans le courant de masse, en suivant le mouvement de vrille ou de rotation.

2. Procédé selon la revendication 1, caractérisé en ce que le matériau filamenteux est composé de fils élastiques (18) dont le nombre correspond au nombre de perçages intérieurs (16) et pénétrant dans le canal (4).

3. Procédé selon la revendication 1, caractérisé en ce qu'un matériau plastique, facilement vaporisable ou pouvant être éliminé au moyen de processus chimiques ou physiques, se présentant sous forme de fils, est extrudé dans le courant de masse, à la vitesse d'écoulement de la masse extrudée, dans cette dernière.

4. Procédé selon la revendication 1, caractérisé en ce que le matériau filamenteux est enlevé au plus tard lors du processus de frittage.

5. Procédé selon la revendication 3 ou 4, caractérisé en ce que le matériau filamenteux plastique et amenée sous pression depuis l'extérieur.

6. Procédé selon l'une des revendications 3 à 5, caractérisé en ce que le matériau filamenteux est plastifié par mise sous pression.

7. Procédé selon l'une des revendications 3 à 6, caractérisé en ce que le matériau filamenteux est plastifié par augmentation de la température.

8. Procédé selon l'une des revendications 3 à 7, caractérisé par un matériau filamenteux restant plastique sur une large plage de pression et/ou de température.

9. Procédé selon l'une des revendications 2 à 8, caractérisé en ce que le diamètre extérieur des fils élastiques (18), ou du matériau plastique filamenteux extrudé à l'intérieur correspond au diamètre intérieur des perçages intérieurs (16) vrillé.

10. Outil d'extrusion, pour mettre en oeuvre le procédé selon l'une des revendications 1 à 9, avec une buse et un mandrin coaxial intérieur, caractérisé en ce que le dispositif de mise en rotation est réalisé sous forme de vis de vrillage (8) à un ou plusieurs filets, disposée coaxialement et -en observant dans le direction d'extrusion- devant l'embouchure de buse (3) réalisée sous forme de canal cylindrique (4) lisse.

11. Outil d'extrusion selon la revendication 10, caractérisé en ce que la vis de vrillage (8) est reliée, assujettie en rotation, au mandrin (6) réalisé sous forme de porte-vis.

12. Outil d'extrusion selon la revendication 10, caractérisé en ce que la vis de vrillage (8) est fixée tournante sur le mandrin (6) réalisé sous forme de porte-vis.

13. Outil d'extrusion selon l'une des revendications 10 à 12, caractérisé en ce que des fils élastiques (18), pénétrant dans le canal lisse (4) de l'embouchure de buse (3), jusqu'à l'extrémité de la buse, sont fixés à l'arrêt arrière (13) de la vis de vrillage (8).

14. Outil d'extrusion selon l'une des revendications 10 à 12, caractérisé en ce que des perçages (15), sont disposés dans la vis de vrillage (8), en s'étendant jusqu'à son arête arrière (13), et sont reliés, par l'intermédiaire de canaux (11, 12) du mandrin (6), à une amenée de matériau filamenteux plastique.

15. Outil d'extrusion selon la revendication 14, caractérisé en ce que l'amenée de matériau filamenteux plastique est réalisée sous forme de chambre de pression (10).

16. Outil d'extrusion selon l'une des revendications 10 à 15, caractérisé en ce qu'est disposé un dispositif de mesure de pression (14), mesurant la pression du débit de masse, dans la zone de l'arête arrière (13) de la vis de vrillage (8).

17. Outil d'extrusion selon l'une des revendications 10 à 16, caractérisé en ce que l'angle de rotation de la vis de vrillage (8) est différent, d'un facteur déterminé, de l'angle de rotation des perçages intérieurs (16) des barreaux (17).

18. Outil d'extrusion selon la revendication 17, caractérisé en ce que la chambre de pression (10) est réalisée sous forme d'extrudeuse à piston ou à vis.

19. Outil d'extrusion selon l'une des revendications 10 à 18, caractérisé en ce que la pièce d'embouchure de buse (3) portant le canal cylindrique lisse (4) est réalisée tournante.

20. Outil d'extrusion selon la revendications 18, caractérisé en ce que la pièce d'embouchure de buse (3) tournante est entraînée depuis l'extérieur.

21. Outil d'extrusion selon l'une des revendications 10 à 20, caractérisé en ce qu'à proximité de la pièce d'embouchure de buse est disposé un dispositif de marquage (19), localement fixe, pour appliquer des lignes ou des bandes de mesure sur le courant de masse en train de sortir, et un dispositif de mesure (20) pour déterminer le pas de la rotation.

22. Barreau en métal dur ou en céramique, pouvant être fabriqué selon le procédé selon l'une des revendications 1 à 9, avec au moins un perçage intérieur dont l'axe suit une hélice, caractérisé en ce que la surface extérieure ou d'enveloppe du barreau est réalisée sans nécessité de procéder à une reprise d'usinage de la périphérie extérieure d'une surface d'enveloppe cylindrique à section circulaire lisse, ne présentant par d'empreintes, cavités, cannelures ou bossages.
